# EUROPEAN PATENT APPLICATION

(11) **EP 4 707 530 A1**
(43) Date of publication of application: **11.03.2026**
(21) Application number: 25200190.4
(22) Date of filing: 04.09.2025
(51) Int. Cl.: E21C 35/19, B23C 5/10, E01C 23/088, E21C 35/197

(54) **CUTTER ASSEMBLY AND CUTTING TOOL STRUCTURE**

(30) Priority: 05.09.2024 US 202463690812 P
(71) Applicant: Everpads Co., Ltd., 40768 Taichung (TW)
(72) Inventor: Chiang, Chun-Li, 40768 Taichung (TW)
(74) Representative: Nederlandsch Octrooibureau

(57) **Abstract**

A cutter assembly includes a cutter body, an insert and a gasket. The cutter body includes a head and a handle. The head includes a tapered forward portion having a seat disposed at a forward end and a head base. The head base includes an abutment surface and an annular protrusion disposed at the abutment surface. The insert is brazed into the seat. The gasket includes a gasket body, a through hole and a cutter surface groove. The gasket body includes a cutter surface facing towards the head base and a holder surface opposite to the cutter surface. The through hole penetrates the gasket body. The cutter surface groove is disposed at the cutter surface and located between an outer periphery of the gasket body and the through hole. When the gasket is assembled with the cutter body, the annular protrusion embeds in the cutter surface groove.

## Description

### BACKGROUND

### Technical Field

The present disclosure relates to a cutter assembly and a cutting tool structure. More particularly, the present disclosure relates to a cutter assembly and a cutting tool structure applied to a milling machine for milling a road.

### Description of Related Art

Due to prolonged use, roads in many areas have deteriorated in quality. In addition to being unsightly, such conditions may pose risks to road users, thereby creating a need for pavement resurfacing.

In response to the need of mass repairing on roads, the practitioners of road milling field developed a cutting tool structure, and a gasket is disposed between a cutter and a chisel holder to buffer the collision between the cutter and the chisel holder during the milling process, thereby reducing the loss rate of the cutter. However, due to the high impact during the milling process, the conventional gasket often fails to be installed stably on the chisel holder such that the gasket cannot abut against the cutter stably, thereby limiting the buffering effect.

Accordingly, a cutter assembly which can stably assemble a gasket and a cutter and effectively prevent abrasion of the chisel holder is still a goal which the practitioners pursue.

### SUMMARY

According to one aspect of the present disclosure, a cutter assembly includes a cutter body and a gasket. The cutter body includes a head and a handle. The head includes a tapered forward portion and a head base. The tapered forward portion has a seat disposed at a forward end. One end of the head base is connected to a rear end of the tapered forward portion, and the other end of the head base includes an abutment surface and an annular protrusion disposed at the abutment surface. The handle is connected to the other end of the head base. The gasket is installed on the cutter body, and the gasket includes a gasket body, a through hole, and a cutter surface groove. The gasket body includes a cutter surface facing towards the head base and a holder surface opposite to the cutter surface. The through hole penetrates the gasket body, wherein the through hole is configured for the handle to be inserted therein. The cutter surface groove is disposed at the cutter surface and located between an outer periphery of the gasket body and the through hole. When the gasket is assembled with the cutter body, the annular protrusion embeds in the cutter surface groove.

According to the cutter assembly of the foregoing aspect, the cutter assembly can further include an insert brazed into the seat. The insert includes a conical forward cutting end, a cylindrical midsection and a base. One end of the cylindrical midsection is connected to the conical forward cutting end. The base is connected to the other end of the cylindrical midsection. The base includes a bottom surface, a surrounding concave curved surface and at least one water accumulation hole. The at least one water accumulation hole is disposed on the surrounding concave curved surface.

According to the cutter assembly of the foregoing aspect, the at least one water accumulation hole can be in a shape of a water drop, and the at least one water accumulation hole may have a first volume away from the bottom surface and a second volume close to the bottom surface.

According to the cutter assembly of the foregoing aspect, the insert can further include a positioning concave recessed in the bottom surface of the base.

According to the cutter assembly of the foregoing aspect, a maximum depth of the positioning concave relative to the bottom surface along an axial direction of the insert can range from 2.5 mm to 3.5 mm.

According to the cutter assembly of the foregoing aspect, a depth of the second volume of the at least one water accumulation hole along an axial direction of the insert can be D1, a depth of the seat relative to along an axial direction of the tapered forward portion can be D3, and a ratio of D3 to D1 is 2 to 3.

According to the cutter assembly of the foregoing aspect, the insert can further include at least one protrusion disposed at the bottom surface of the base.

According to the cutter assembly of the foregoing aspect, an outer diameter of the head base can be W1, a height of the head along an axial direction can be H1, and a ratio of W1 to H1 is 1.52 to 2.1.

According to the cutter assembly of the foregoing aspect, a maximum height of the annular protrusion relative to the abutment surface along an axial direction of the head base can range from 0.2 mm to 5 mm.

According to the cutter assembly of the foregoing aspect, the handle can include a junction connected to the head base and a lower handle connected to the junction.

According to the cutter assembly of the foregoing aspect, the handle can include the junction connected to the head base, the lower handle connected to the junction and an annular concave part recessed at the lower handle.

According to the cutter assembly of the foregoing aspect, the gasket can further include a plurality of radial convex portions and a plurality of radial protruding portions, and each of the plurality of radial convex portions and each of the plurality of radial protruding portions are arranged alternatively to each other.

According to the cutter assembly of the foregoing aspect, the gasket can further include a covering portion annularly disposed on the gasket body and protruding outward from the holder surface.

According to the cutter assembly of the foregoing aspect, a covering thickness of the covering portion relative to the holder surface can be greater than or equal to 5 mm and less than 7 mm.

According to the cutter assembly of the foregoing aspect, the gasket can further include at least one holder surface groove disposed at the holder surface and located between the covering portion and the through hole.

According to the cutter assembly of the foregoing aspect, a depth of the at least one holder surface groove relative to the holder surface along an axial direction can be greater than or equal to 0.2 mm and less than 0.3 mm.

According to the cutter assembly of the foregoing aspect, a number of the at least one holder surface groove can be two, and a ring protrusion can be formed between the two holder surface grooves.

According to the cutter assembly of the foregoing aspect, the gasket can further include an extending portion located at the holder surface, and the extending portion protrudes from the holder surface and surrounds the through hole.

According to the cutter assembly of the foregoing aspect, a radial thickness of the extending portion can increase gradually towards the at least one holder surface groove along an axial direction.

According to another aspect of the present disclosure, a cutting tool structure includes a chisel holder and the aforementioned cutter assembly. The cutter assembly is installed on the chisel holder.

### BRIEF DESCRIPTION OF THE DRAWINGS

The present disclosure can be more fully understood by reading the following detailed description of the embodiment, with reference made to the accompanying drawings as follows:
Fig. 1 shows a three-dimensional view of a cutter assembly according to one embodiment of the present disclosure.
Fig. 2 shows a cross-sectional view of the cutter assembly according to one embodiment in Fig. 1.
Fig. 3A shows a three-dimensional view of an insert according to one embodiment of the present disclosure.
Fig. 3B shows a top view of the insert according to one embodiment in Fig. 3A.
Fig. 3C shows a cross-sectional view of the insert along sectional line 3C-3C in Fig. 3B according to one embodiment in Fig. 3A.
Fig. 4 shows a cross-sectional view of an insert according to another embodiment of the present disclosure.
Fig. 5A shows one three-dimensional view of a cutter body according to one embodiment of the present disclosure.
Fig. 5B shows another three-dimensional view of the cutter body according to one embodiment in Fig. 5A.
Fig. 5C shows a cross-sectional view of the cutter body according to one embodiment in Fig. 5A.
Fig. 6A shows a three-dimensional view of a cutter body according to another embodiment of the present disclosure.
Fig. 6B shows a cross-sectional view of the cutter body according to another embodiment in Fig. 6A.
Fig. 7A shows one three-dimensional view of a gasket according to one embodiment of the present disclosure.
Fig. 7B shows another three-dimensional view of the gasket according to one embodiment in Fig. 7A.
Fig. 7C shows a cross-sectional view of the gasket according to one embodiment in Fig. 7A.
Fig. 8 shows a schematic view of a cutting tool structure according to one embodiment of the present disclosure.

### DETAILED DESCRIPTION

The embodiments will be described with the drawings. For clarity, some practical details will be described below. However, it should be noted that the present disclosure should not be limited by the practical details, that is, in some embodiment, the practical details is unnecessary. In addition, for simplifying the drawings, some conventional structures and elements will be simply illustrated, and repeated elements may be represented by the same labels.

It will be understood that when an element (or device) is referred to as be "connected to" another element, it can be directly connected to the other element, or it can be indirectly connected to the other element, that is, intervening elements may be present. In contrast, when an element is referred to as be "directly connected to" another element, there are no intervening elements present. In addition, the terms first, second, third, etc. are used herein to describe various elements or components, these elements or components should not be limited by these terms. Consequently, a first element or component discussed below could be termed a second element or component. Besides, a combination of these elements (unite or circuits) of the present closure is not a common combination in this art, so it cannot be predicted whether a relation of the combination hereof can be easily done by a person having skill in the art by these elements (units or circuits).

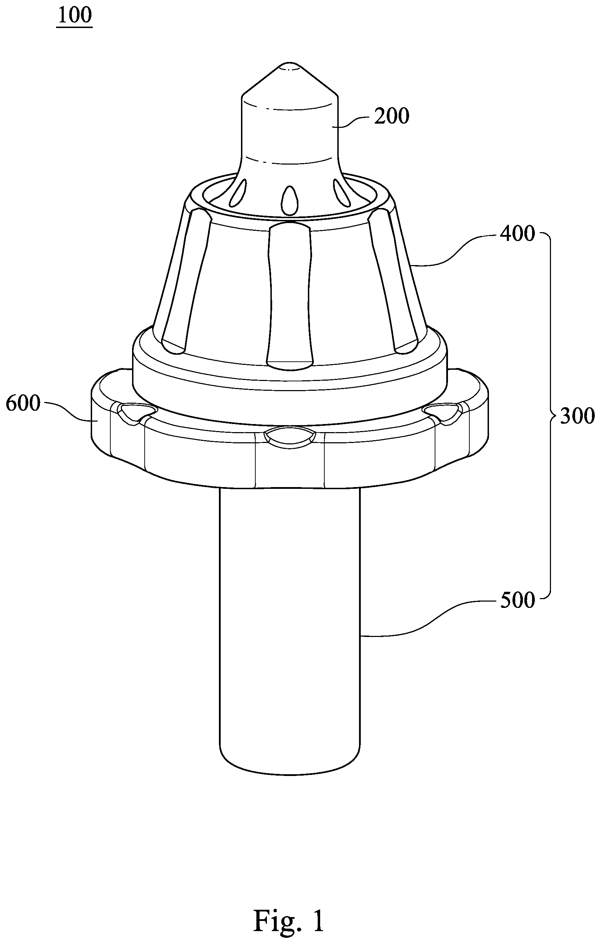

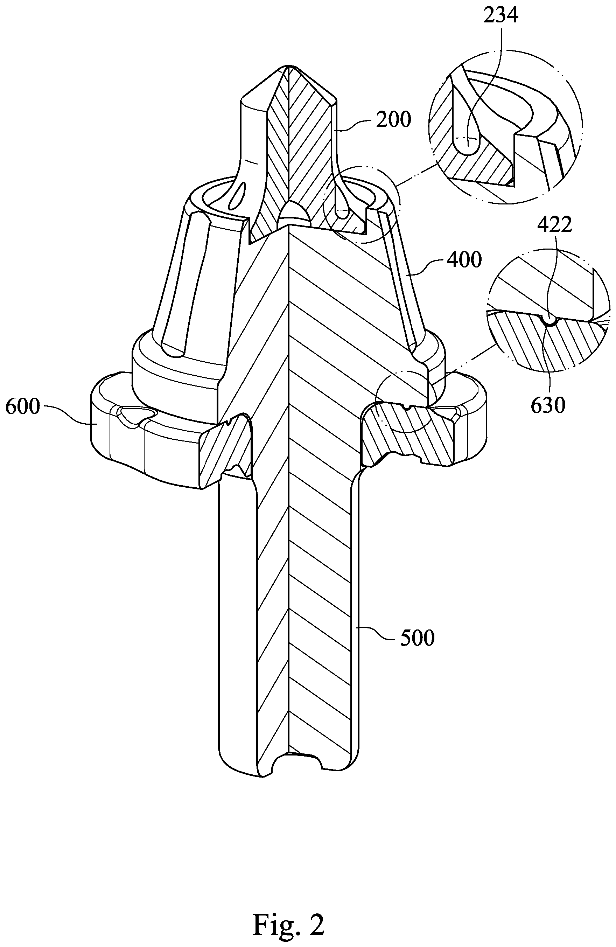

Reference is made to Fig. 1 and Fig. 2. Fig. 1 shows a three-dimensional view of a cutter assembly 100 according to one embodiment of the present disclosure, and Fig. 2 shows a cross-sectional view of the cutter assembly 100 according to one embodiment in Fig. 1. As shown in Fig. 1 and Fig. 2, the cutter assembly 100 includes a cutter body 300 and a gasket 600. The cutter body 300 includes a head 400 and a handle 500. The gasket 600 is installed on the cutter body 300.

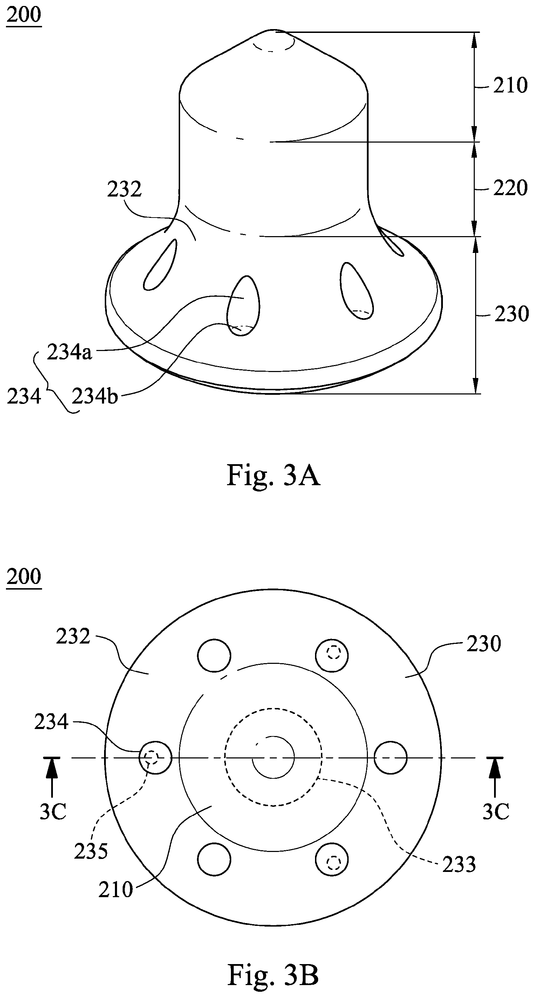

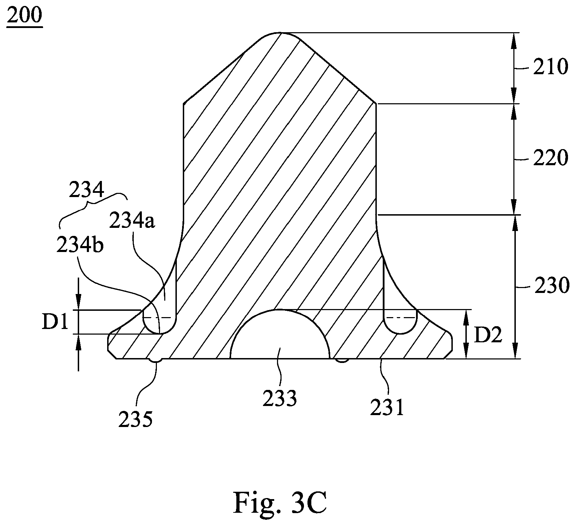

The cutter assembly 100 further can include an insert 200, which is brazed into the head 400 of the cutter body 300. Reference is made to Fig. 3A to Fig. 3C. Fig. 3A shows a three-dimensional view of the insert 200 according to one embodiment of the present disclosure, Fig. 3B shows a top view of the insert 200 according to one embodiment in Fig. 3A, and Fig. 3C shows a cross-sectional view of the insert 200 along sectional line 3C-3C in Fig. 3B according to one embodiment in Fig. 3A. The insert 200 has a conical forward cutting end 210, a cylindrical midsection 220 and a base 230. One end of the cylindrical midsection 220 is connected to the conical forward cutting end 210, and the base 230 is connected to the other end of the cylindrical midsection 220. The insert 200 can be made of tungsten steel, and the conical forward cutting end 210 is for cutting a hard surface. The base 230 includes a bottom surface 231, a surrounding concave curved surface 232 and at least one water accumulation hole 234 disposed on the surrounding concave curved surface 232.

The water accumulation holes 234 can be in a shape of a water drop, and the water accumulation holes 234 has a first volume 234a away from the bottom surface 231 and a second volume 234b close to the bottom surface 231, and a depth of the second volume 234b along an axial direction of the insert 200 is D1. The design of the water accumulation hole 234 allows water to stay for cooling down the insert 200 during the milling process, and provides good heat dissipation. A number of the at least one water accumulation hole 234 can be six, but the present disclosure is not limited thereto. The water accumulation holes 234 are arranged at equal intervals around the surrounding concave curved surface 232. When the cutter assembly 100 is used, the cutter assembly 100 is installed on a chisel holder. During the installing or use of the cutter assembly 100, at least one water accumulation holes 234 will appear in any direction, so that the installation direction of the cutter assembly 100 is not limited.

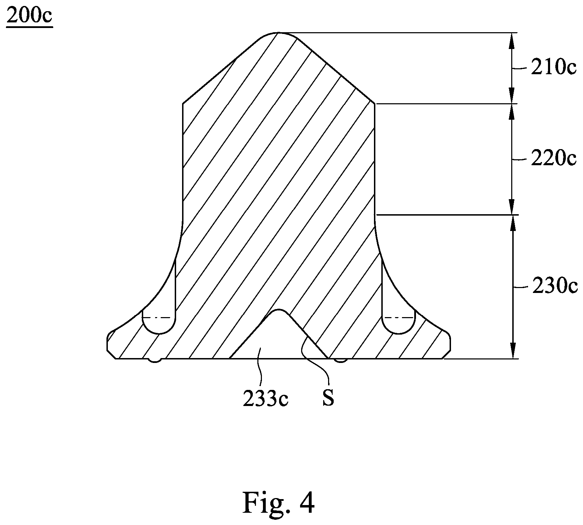

The insert 200 further includes a positioning concave 233 and at least one protrusion 235. The positioning concave 233 is recessed in the bottom surface 231 of the base 230, and the positioning concave 233 is curved. The at least one protrusion 235 protrudes from the bottom surface 231 of the base 230. The positioning concave 233 and the at least one protrusion 235 are used for fixing the bottom surface 231 and the seat of the head 400 of the cutter body 300. A number of the at least one protrusion 235 can be three, but the present disclosure is not limited thereto. A maximum depth of the positioning concave 233 relative to the bottom surface 231 along the axial direction of the insert 200 is D2, which can range from 2.5 mm to 3.5 mm. In addition, reference is made to Fig. 4, which shows a cross-sectional view of an insert 200c according to another embodiment of the present disclosure. The insert 200c has a conical forward cutting end 210c, a cylindrical midsection 220c and a base 230c. Structures and configuration of the conical forward cutting end 210c, the cylindrical midsection 220c and the base 230c are similar with the structures and configuration of the conical forward cutting end 210, the cylindrical midsection 220 and the base 230, and will not be described herein. It is worthy to be mention that, a positioning concave 233c of the insert 200c is tapered. The positioning concave 233c with a taper S is easier to process, easier to position and smoother to rotate.

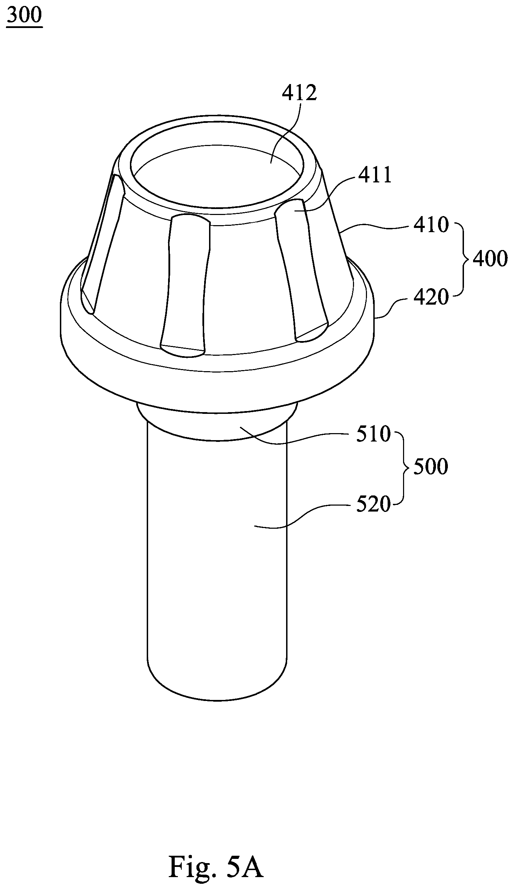

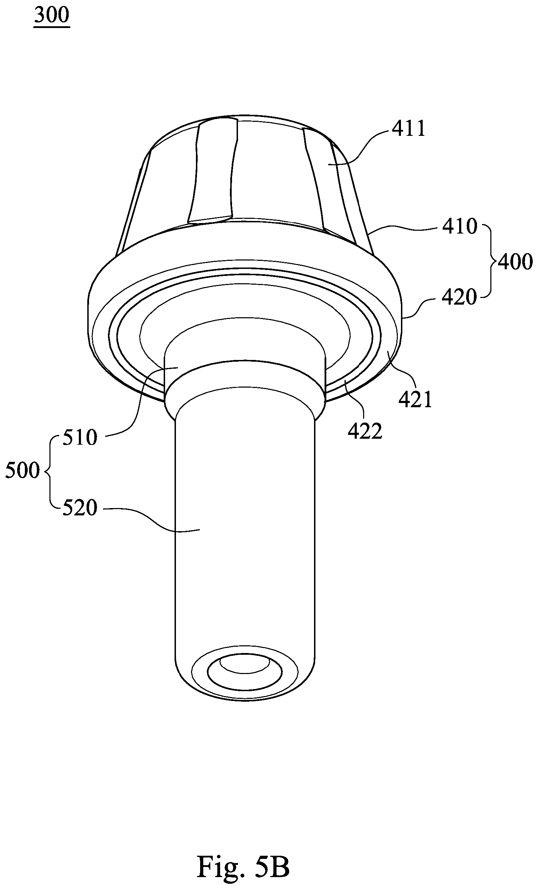

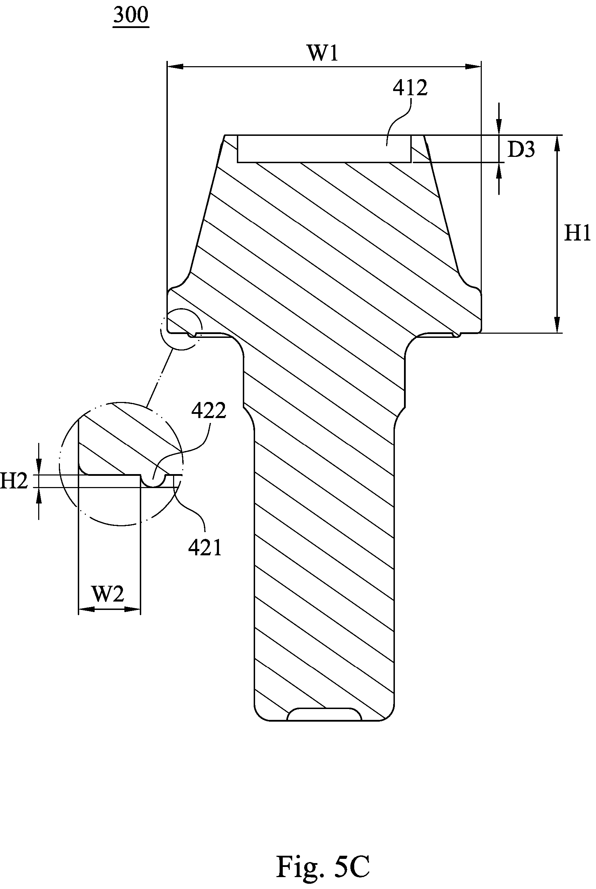

Reference is made to Fig. 5A to Fig. 5C. Fig. 5A shows one three-dimensional view of the cutter body 300 according to one embodiment of the present disclosure, Fig. 5B shows another three-dimensional view of the cutter body 300 according to one embodiment in Fig. 5A, and Fig. 5C shows a cross-sectional view of the cutter body 300 according to one embodiment in Fig. 5A. The cutter body 300 includes a head 400 and a handle 500. The head 400 includes a tapered forward portion 410 and a head base 420.

The tapered forward portion 410 includes a polarity of recesses 411 and a seat 412. The recesses 411 are arranged at equal intervals around a surface of the tapered forward portion 410. The design of the recesses 411 allows the surface of the tapered forward portion 410 formed a concave and convex structure. When performing road milling operations, the bulk material that collapses after the road medium is milled by the insert 200 can produce impact force on the recesses 411, which helps to further increase the self-rotation of the cutter assembly 100 and reduce the eccentric wear phenomenon of the insert 200. The seat 412 is disposed at the forward end thereof, and the insert 200 is brazed into the seat 412. A depth of the seat 412 relative to along an axial direction of the tapered forward portion 410 is D3, and the depth of the second volume 234b of the water accumulation hole 234 along the axial direction of the insert 200 is D1, wherein a ratio of D3 to D1 can be 2 to 3.

One end of the head base 420 connected to a rear end of the tapered forward portion 410, and the other end of the head base 420 includes an abutment surface 421 and an annular protrusion 422. The abutment surface 421 faces towards the handle 500, and the annular protrusion 422 is disposed at the abutment surface 421. An outer diameter of the head base 420 is W1, which can range from 37 mm to 50 mm. A height of the head 400 along an axial direction is H1, which can range from 23 mm to 25 mm. A ratio of W1 to H1 can be 1.52 to 2.1. Furthermore, a distance from a circumference of the head base 420 to the nearest annular protrusion 422 is W2, which can range from 2 mm to 4 mm. A maximum height of the annular protrusion 422 relative to the abutment surface 421 along an axial direction of the head base 420 is H2, which can range from 0.2 mm to 5 mm. Preferably, H2 can range from 0.3 mm to 3 mm. Therefore, the annular protrusion 422 can help the cutter body 300 to be stably assembled with the gasket 600 without generating friction.

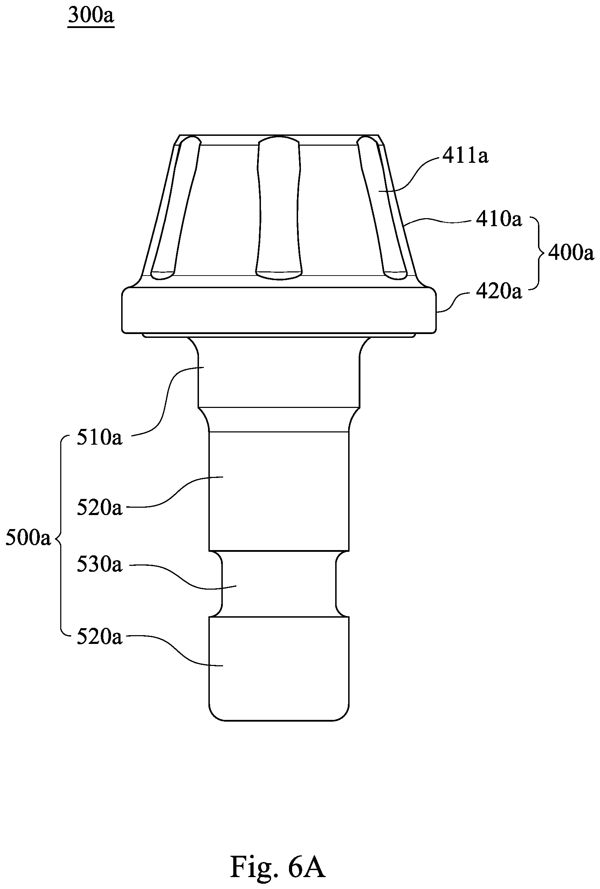

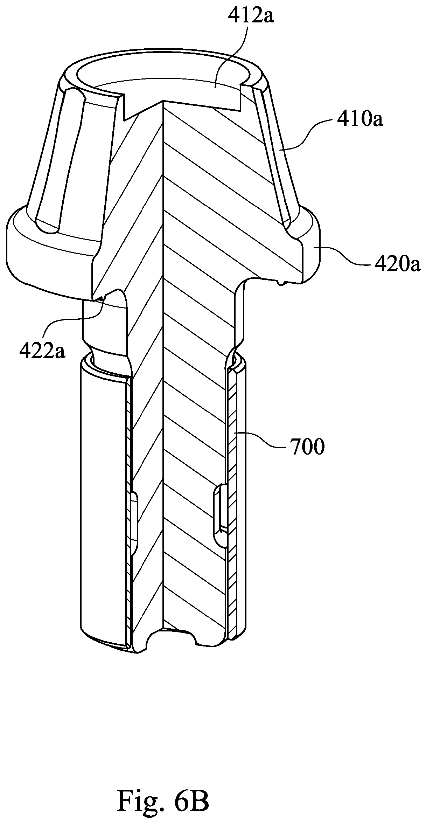

The handle 500 includes a junction 510 and a lower handle 520. The junction 510 connects to the head base 420 and inserts into a through hole of the gasket 600, and the lower handle 520 is for inserting the gasket 600 and installing on an opening of the chisel holder. In addition, reference is made to Fig. 6A and Fig. 6B. Fig. 6A shows a three-dimensional view of a cutter body 300a according to another embodiment of the present disclosure, and Fig. 6B shows a cross-sectional view of the cutter body 300a according to another embodiment in Fig. 6A. The cutter body 300a includes a head 400a and a handle 500a. The head 400a includes a tapered forward portion 410a and a head base 420a. The tapered forward portion 410a includes a polarity of recesses 411a and a seat 412a. The head base 420a includes an annular protrusion 422a. Structures and configuration of the head 400a are similar with the structures and configuration of the head 400, and will not be described herein. It is worthy to be mention that, the handle 500a includes a junction 510a, a lower handle 520a and an annular concave part 530a. The annular concave part 530a is recessed at the lower handle 520a, hence the annular concave part 530a at the distal end of the handle 500a can hold a retainer sleeve 700 on the handle 500a.

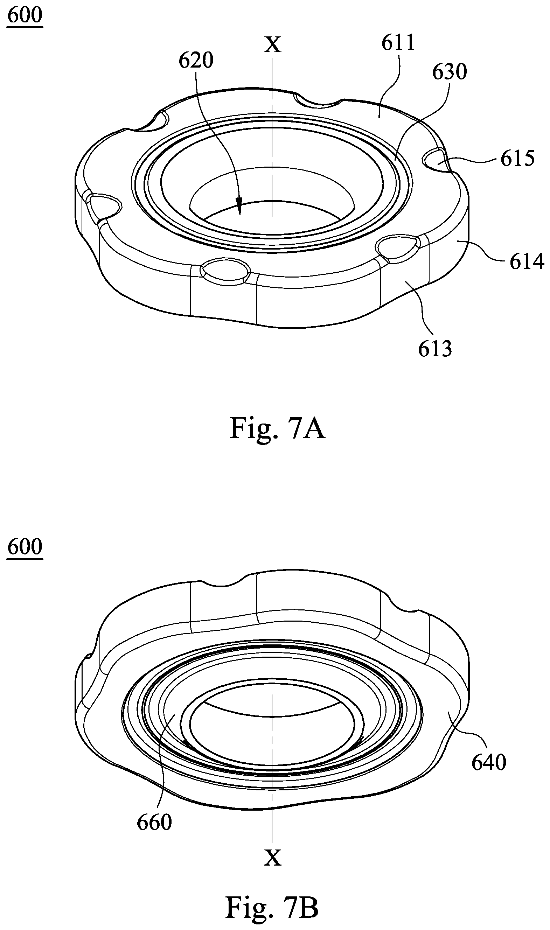

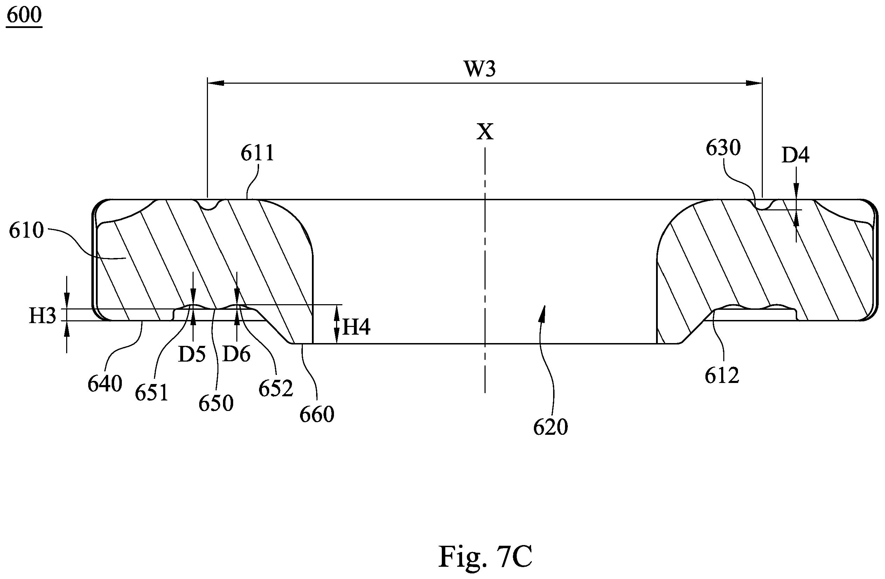

Reference is made to Fig. 7A to Fig. 7C. Fig. 7A shows one three-dimensional view of the gasket 600 according to one embodiment of the present disclosure, Fig. 7B shows another three-dimensional view of the gasket 600 according to one embodiment in Fig. 7A, and Fig. 7C shows a cross-sectional view of the gasket 600 according to one embodiment in Fig. 7A. The gasket 600 includes a gasket body 610, a through hole 620, and a cutter surface groove 630.

The gasket body 610 includes a cutter surface 611 facing towards the head base 420 and a holder surface 612 opposite to the cutter surface 611. The through hole 620 penetrates the gasket body 610 and is configured for the handle 500 of the cutter body 300 to insert therein, and the through hole 620 has an axial direction X. The gasket body 610 can further include a plurality of radial convex portions 613 and a plurality of radial protruding portions 614, and each of the radial convex portions 613 and each of the radial protruding portions 614 are arranged alternatively to each other. Furthermore, the gasket body 610 can further include a plurality of notches 615, and the notches 615 are located at the cutter surface 611 and arranged around the axial direction X at intervals.

The cutter surface groove 630 is disposed at the cutter surface 611 and located between an outer periphery of the gasket body 610 and the through hole 620. A maximum depth of the cutter surface groove 630 relative to the cutter surface 611 along the axial direction X is D4, which can range from 0.2 mm to 5 mm and corresponds to the maximum height of the annular protrusion 422. Preferably, D4 can range from 0.3 mm to 3 mm. A diameter of the cutter surface groove 630 is W3, which can range from 33 mm to 48 mm. When the gasket 600 is assembled with the cutter body 300, the annular protrusion 422 can embed in the cutter surface groove 630, thereby improving the stability of installing the gasket 600 and the cutter body 300.

The gasket 600 can further includes a covering portion 640 annularly disposed on the gasket body 610 and protruding outward from the holder surface 612 along the axial direction X. The covering portion 640 has a covering thickness H3 relative to the holder surface 612, which can be greater than or equal to 5 mm and less than 7 mm.

In addition, the gasket 600 can further include at least one holder surface groove 651, 652 disposed at the holder surface 612 and located between the covering portion 640 and the through hole 620. A depth of the at least one holder surface groove 651, 652 relative to the holder surface 612 along an axial direction X can be greater than or equal to 0.2 mm and less than 0.3 mm. A number of the at least one holder surface groove 651, 652 is two, the two holder surface grooves 651, 652 are disposed at the holder surface 612 and located between the covering portion 640 and the through hole 620, the holder surface groove 652 is located between the holder surface groove 651 and the through hole 620, and a ring protrusion 650 is formed between the two holder surface grooves 651, 652. A depth of the holder surface groove 651 relative to the holder surface 612 along the axial direction X is D5, which can be greater than or equal to 0.2 mm and less than 0.3 mm. A depth of the holder surface groove 652 relative to the holder surface 612 along the axial direction X is D6, which can be greater than or equal to 0.2 mm and less than 0.3 mm. Therefore, it can avoid that the depths D5, D6 become overlarge to prevent causing an overlarge gap between the gasket 600 and the chisel holder.

Moreover, the gasket 600 can further include the extending portion 660 located at the holder surface 612, protruding from the holder surface 612, and surrounding the through hole 620. A radial thickness of the extending portion 660 increases gradually towards the holder surface groove 652 along the axial direction X. The extending portion 660 has a maximum extending height H4 relative to the holder surface groove 652 along the axial direction X.

When the cutter assembly 100 is assembled with the chisel holder, the covering portion 640 can cover the opening of the chisel holder, the ring protrusion 650 can abut against the chisel holder, the extending portion 660 inserts into the opening of the chisel holder. With the ring protrusion 650 formed between the two holder surface grooves 651, 652, a contacting area between the holder surface 612 and the chisel holder is increased to stably position the gasket 600 at the chisel holder, thereby preventing abrasion of the chisel holder caused by wearing between the gasket 600 and the chisel holder during milling process. Therefore, abrasion of the chisel holder can be prevented, and a service life of the cutter assembly 100 and the chisel holder can be increased.

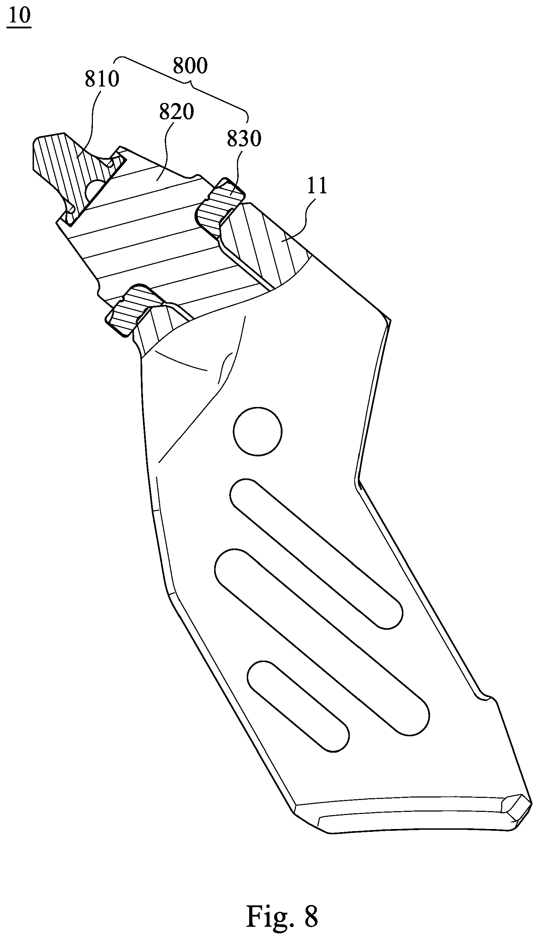

Reference is made to Fig. 8, which shows a schematic view of a cutting tool structure 10 according to one embodiment of the present disclosure. The cutting tool structure 10 includes a chisel holder 11 and a cutter assembly 800, wherein the cutter assembly 800 is installed on the chisel holder 11. The cutter assembly 800 includes an insert 810, a cutter body 820 and a gasket 830. The gasket 830 is disposed at the chisel holder 11 and configured for the cutter body 820 to be installed and to rest thereon. Structures and configurations of the insert 810, the cutter body 820 and the gasket 830 are similar with the structures and configurations of the insert 200, the cutter body 300 and the gasket 600, but the present disclosure is not limited thereto. A handle of the cutter body 820 is inserted in a through hole of the gasket 830 and installed on an opening of the chisel holder 11, and an extending portion of the gasket 830 abuts against the opening of the chisel holder 11. By embedding an annular protrusion of the cutter body 820 in a cutter surface groove of the gasket 830, the cutter body 820 is positioned correctly to improve the stability of installing the gasket 830 on the cutter body 820 and to reduce the wearing between the cutter body 820 and the gasket 830, thereby preventing abrasion of the cutter body 820. Furthermore, during the milling process, a ring protrusion of the gasket 830 contacts with and is worn by the chisel holder 11 such that the chisel holder 11 forms a corresponding convex surface. The gasket 830 can be further positioned at the chisel holder 11 by the ring protrusion, and then the gasket 830 can be prevented from detaching from the chisel holder 11 during the milling process. As shown in Fig. 8, a gap is formed between the gasket 830 and the chisel holder 11 such that the gasket 830 is not sealed by the chisel holder 11 to maintain the mobility of the gasket 830.

## Claims

1. A cutter assembly (100), **characterized in** comprising:
a cutter body (300), comprising:
a head (400), comprising:
a tapered forward portion (410) having a seat (412) disposed at a forward end; and
a head base (420), wherein one end of the head base (420) connected to a rear end of the tapered forward portion (410), and the other end of the head base (420) comprises an abutment surface (421) and an annular protrusion (422) disposed at the abutment surface (421); and
a handle (500) connected to the other end of the head base (420); and
a gasket (600) installed on the cutter body (300), wherein the gasket (600) comprises:
a gasket body (610), comprising:
a cutter surface (611) facing towards the head base (420); and
a holder surface (612) opposite to the cutter surface (611);
a through hole (620) penetrating the gasket body (610), wherein the through hole (620) is configured for the handle (500) to be inserted therein; and
a cutter surface groove (630) disposed at the cutter surface (611) and located between an outer periphery of the gasket body (610) and the through hole (620);
wherein when the gasket (600) is assembled with the cutter body (300), the annular protrusion (422) embeds in the cutter surface groove (630).

2. The cutter assembly (100) of claim 1, further comprising an insert (200) brazed into the seat (412), wherein the insert (200) comprises:
a conical forward cutting end (210);
a cylindrical midsection (220), wherein one end of the cylindrical midsection (220) is connected to the conical forward cutting end (210); and
a base (230) connected to the other end of the cylindrical midsection (220), wherein the base (230) comprises a bottom surface (231), a surrounding concave curved surface (232) and at least one water accumulation hole (234), and the at least one water accumulation hole (234) is disposed on the surrounding concave curved surface (232).

3. The cutter assembly (100) of any of claims 1-2, wherein the at least one water accumulation hole (234) is in a shape of a water drop, and the at least one water accumulation hole (234) has a first volume (234a) away from the bottom surface (231) and a second volume (234b) close to the bottom surface (231).

4. The cutter assembly (100) of any of claims 1-3, wherein the insert (200) further comprises a positioning concave (233) recessed in the bottom surface (231) of the base (230).

5. The cutter assembly (100) of any of claims 1-4, wherein a maximum depth of the positioning concave (233) relative to the bottom surface (231) along an axial direction of the insert (200) ranges from 2.5 mm to 3.5 mm.

6. The cutter assembly (100) of any of claims 1-5, wherein a depth of the second volume (234b) of the at least one water accumulation hole (234) along an axial direction of the insert (200) is D1, a depth of the seat (412) relative to along an axial direction of the tapered forward portion (410) is D3, and a ratio of D3 to D1 is 2 to 3.

7. The cutter assembly (100) of any of claims 1-6, wherein the insert (200) further comprises at least one protrusion (235) disposed at the bottom surface (231) of the base (230).

8. The cutter assembly (100) of any of claims 1-7, wherein an outer diameter of the head base (420) is W1, a height of the head (400) along an axial direction is H1, and a ratio of W1 to H1 is 1.52 to 2.1.

9. The cutter assembly (100) of any of claims 1-8, wherein a maximum height of the annular protrusion (422) relative to the abutment surface (421) along an axial direction of the head base (420) ranges from 0.2 mm to 5 mm.

10. The cutter assembly (100) of any of claims 1-9, wherein the handle (500) comprises a junction (510) connected to the head base (420) and a lower handle (520) connected to the junction (510).

11. The cutter assembly (100) of any of claims 1-10, wherein the handle (500) comprises the junction (510) connected to the head base (420), the lower handle (520) connected to the junction (510) and an annular concave part (530a) recessed at the lower handle (520).

12. The cutter assembly (100) of any of claims 1-11, wherein the gasket (600) further comprises a plurality of radial convex portions (613) and a plurality of radial protruding portions (614), and each of the plurality of radial convex portions (613) and each of the plurality of radial protruding portions (614) are arranged alternatively to each other.

13. The cutter assembly (100) of any of claims 1-12, wherein the gasket (600) further comprises a covering portion (640) annularly disposed on the gasket body (610) and protruding outward from the holder surface (612).

14. The cutter assembly (100) of any of claims 1-13, wherein a covering thickness of the covering portion (640) relative to the holder surface (612) is greater than or equal to 5 mm and less than 7 mm.

15. The cutter assembly (100) of any of claims 1-14, wherein the gasket (600) further comprises at least one holder surface groove (615, 652) disposed at the holder surface (612) and located between the covering portion (640) and the through hole (620).

16. The cutter assembly (100) of any of claims 1-15, wherein a depth of the at least one holder surface groove (615, 652) relative to the holder surface (612) along an axial direction is greater than or equal to 0.2 mm and less than 0.3 mm.

17. The cutter assembly (100) of any claims 1-16, wherein a number of the at least one holder surface groove (615, 652) is two, and a ring protrusion (650) is formed between the two holder surface grooves (615, 652).

18. The cutter assembly (100) of any of claims 1-17, wherein the gasket (600) further comprises an extending portion (660) located at the holder surface (612), and the extending portion (660) protrudes from the holder surface (612) and surrounds the through hole (620).

19. The cutter assembly (100) of any of claims 1-18, wherein a radial thickness of the extending portion (660) increases gradually towards the at least one holder surface groove (615, 652) along an axial direction.

20. A cutting tool structure (10), **characterized in** comprising:
a chisel holder (11); and
the cutter assembly (100) of any of claims 1-19, wherein the cutter assembly (100) is installed on the chisel holder (11).
